# EUROPEAN PATENT SPECIFICATION

(11) **EP 2 519 398 B1**
(45) Date of publication and mention of the grant of the patent: **05.03.2014**
(21) Application number: 10801261.8
(22) Date of filing: 23.12.2010
(51) Int. Cl.: B29C 65/00, B29C 65/18, B65B 7/16, B65B 25/06, B65B 31/02, B65B 61/02

(54) **FOOD PACKAGING PROCESS**
VERFAHREN ZUM VERPACKEN VON NAHRUNGSMITTELN
PROCEDE D'EMBALLAGE D'ALIMENTS

(30) Priority: 29.12.2009 GB 0922668
(43) Date of publication of application: 07.11.2012
(73) Proprietor: ISHIDA EUROPE LIMITED, Birmingham B32 3DB (GB)
(72) Inventor: NIELSEN, Ulrich, Carlin, 8680 Ry (DK)
(74) Representative: Skone James, Robert Edmund
(86) International application number: PCT/GB2010/052198
(87) International publication number: WO 2011/080514

(56) References cited:
- EP-A1- 0 680 880
- DE-U1- 8 122 457
- US-A- 1 384 899
- US-A- 2 591 935
- US-B1- 6 416 798

## Description

The invention relates to a method of monitoring a food packaging process.

It is now a requirement in the food industry to be able to track food items "from birth to consumption" so should any product at any stage be detected as being contaminated, the food item and the batch from which it originated can be traced and removed from the market so that the source of contamination can be eradicated. This traceability of food product has been required for some years and various techniques have been described for achieving this. Examples can be found in WO-A-2006/021802, EP-A-1942459, US-A-2004/0177011, WO-A-2007/020661, US-A-2007/0212789, JP-A-2004284594, JP-A-11301700, JP-A-11059631, US-A-2006/0137547 and "Traceability in the Food Chain", Food Standards Agency, March 2002.

Whilst these techniques are successful in ensuring that contaminated food products can be removed rapidly from the market, we have realised that there are other reasons why the food package can be contaminated which have not so far been addressed in the industry. In particular, contamination can occur during the process by which a food item is packaged. At present, it is very difficult to determine the source of such a contamination so that it can be corrected.

In WO 2010/001112, we describe a method of monitoring a food packaging process comprising:
performing a number of processes to create a packaged food item including sealing the item in a package;
generating an identifier for the package and recording the identifier on the package; and
storing data items relating to the packaging process in one or more storage locations in a database addressed by the said identifier.

This method allows the packaging process for individual packages to be recorded so that if a problem with a particular package is identified then the identifier of that package can be used to obtain data relating to the process used to form the package and thus track where a contamination problem originated. In other words, not simply to a packaging site but to a particular stage in the packing process.

In a typical packaging process, a plastic film is heat sealed onto a container containing the food item. This will usually be carried out within a heat sealing tool comprising several individual heat sealing plates arranged in sequence in a process direction so that a corresponding plurality of containers can be heat sealed together. In order to identify the heat sealing tool, it is known to print information about the tool onto the film prior to supplying the film to the tool. This information could include the tool machine number, date etc. However, it is general not possible to predict which heat sealing plate will be used to seal a film onto each container. Thus, if a fault develops with one of the heat sealing plates, it is not possible to determine from an inspection of the sealed package which heat sealing plate is concerned since the only information provided by the printer relates to the heat sealing tool itself.

In accordance with the present invention, a food packaging method comprises:
placing a food item in a container; and
heat sealing a film cover on the container using a heated plate so as to seal the food item in the container;
characterized by forming a plate identifier in the film during the heat sealing process, the identifier identifying the heated plate used in the heat sealing process.

With this invention, we are able to identify individual heated plates by heat forming an identifier of that plate in the film during the sealing process. This makes it possible to trace any fault in the sealing process back to the individual heated plate concerned.

Preferably, the plate includes a raised portion, defining the plate identifier, for forming a plate identifier in the film. However, a separate heated member could be used to form the identifier in the film although this is less advantageous in view of the need to have a plate and a further member.

The identifier can be of any convenient form but will typically be an alphanumeric character or possibly a geometric character or the like.

The invention can be used in conjunction with methods described and claimed in WO 2010/001112. Thus, the sealed package could be provided with a unique identifier defining a database address at which data items relating to the packaging process can be stored.

Examples include details about the contents of the package e.g. food type, weight, gas mix, batch information, X-ray, weight, seal and label inspection, the box it sent in to etc, material of the package and/or material used to seal the package; one or more of the results of tests performed following said processes such as the results of a seal test or leak test; and one or more of details of a gas mixture used in the package, the weight of the package, and ambient temperature measured during performance of the processes.

A further particularly advantageous data item is an image of the food item and/or package. This could be a visual and/or X-ray image and provides an actual image which can be viewed of the package itself, providing additional confidence to the viewer.

Further examples of data items include an identifier of a box into which the package is supplied and the identity of an organisation which subsequently handles the package. This could be a wholesaler, transit organisation, retailer and the like.

In some cases, third parties such as transit agents, retailers and the like can also store information themselves as data items on the database.

It should be understood in this context that by a "food item" we include single items of food as well as food mixtures and the like. Examples of food stuffs that could constitute food items include natural products such as chicken pieces, fish, poultry or items such as cheese, mince meat etc.

An example of apparatus for carrying out a method according to the present invention will now be described with reference to the accompanying drawings, in which:-
Figure 1 is a block diagram of an example of a food packaging system;
Figure 2 illustrates in more detail the tray sealer portion of the apparatus shown in Figure 1; and,
Figure 3 illustrates an example of a heat sealing plate.

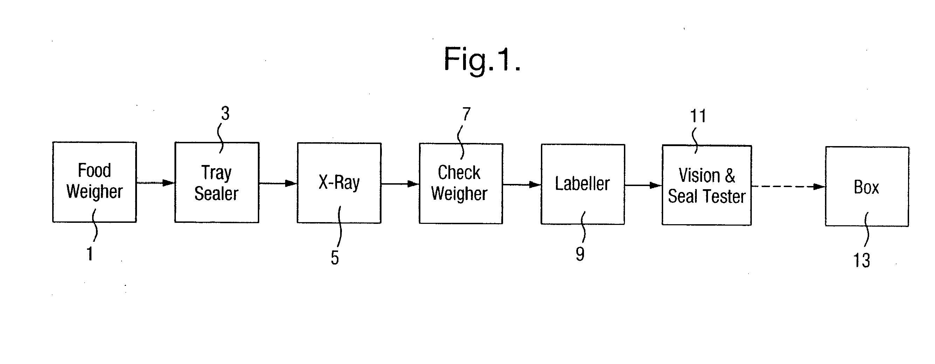

The invention is applicable to a wide variety of food packaging systems and the exact components of that system will vary depending upon the food being packaged and other requirements. In the example shown in Figure 1, the components are essentially conventional and will not be described in detail. In this case, a dual lane system is described although the invention is applicable to single lane systems and systems with more than two lanes.

The food line commences with a fresh food weigher 1 for weighing the amount of a food item to be packaged in a tray. This is then transferred manually or automatically into a tray supplied from a denester (not shown) onto a conveyor of a tray sealer 3 (to be described in more detail below). The tray sealer 3 operates to heat seal a film lid onto the tray, usually with an inert gas mixture sealed within the tray. In other cases (not shown), the weigher 1 may be omitted. This would be for example when the food item is a predetermined quantity of food such as mince meat or a number of slices of meat etc.

Each sealed tray or package is then fed by the respective conveyor through an X-ray machine 5 which obtains an X-ray image of the packaged food item to enable a local operator to check that there are no foreign objects in the food item. The X-ray image is also recorded digitally and stored within the machine 5.

The sealed tray then passes on a respective conveyor to a check weigher 7 which measures the weight of the package (tray and food item) to enable a check to be made that this is correct and the sealed tray then proceeds to a labeller 9 where a label is applied to the package.

The labelled package is then optically inspected by obtaining a visual image which is digitally recorded and a seal test is carried out, both in a unit 11. Finally, the labelled package is picked up by a robot arm or the like and transferred to a box 13 for onward transfer.

In order to record information about each package on a database, a monitoring apparatus (not shown) is provided. This comprises a microprocessor which receives data defining various data items relating to the packaging process and stores them on a SQL database at an address unique to the package. This is described in more detail in WO 2010/001112.

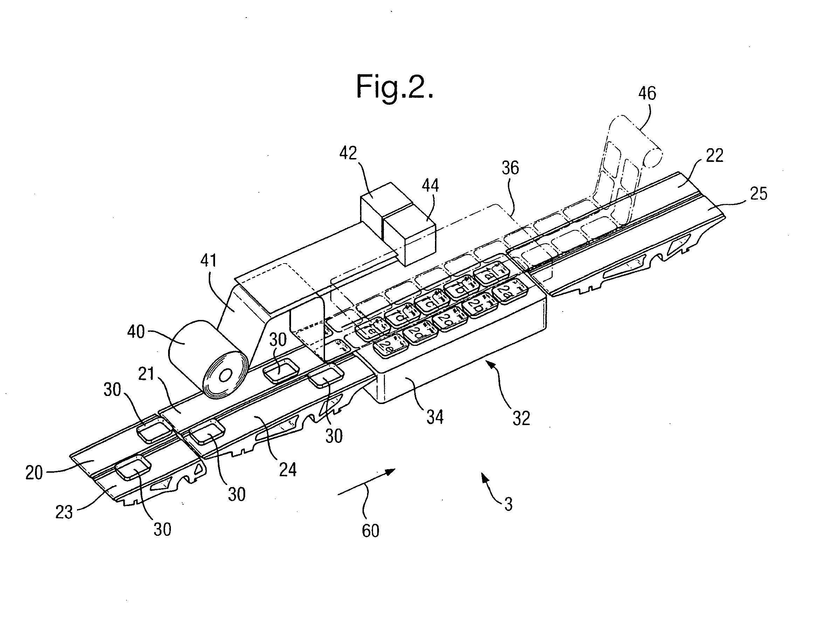

The tray sealer 3 is shown in more detail in Figure 2. As can be seen in Figure 2, the two lanes of the packaging system are defined, within the tray sealer 3, by two sets of conveyors 20,21,22 and 23,24,25 respectively. Plastic trays 30 containing food items are conveyed along the lanes in a direction 60 by the conveyors to be accumulated on conveyors 21,24.

Once each conveyor 21,24 carries five trays, gripper arms (not shown) are actuated to transfer the two sets of five trays into a heat sealing tool 32 where they are deposited in two lines on a base of the tool 34.

A plastics sealing film 41 is supplied from a storage roll 40 past two laterally spaced printers 42,44 corresponding to respective lanes into the heat sealing tool 32 and onto a pick-up roller 46.

The printers 42,44 are adapted to print information on the film 41 about the heat sealing tool 32 such as its machine number, the date of printing etc.

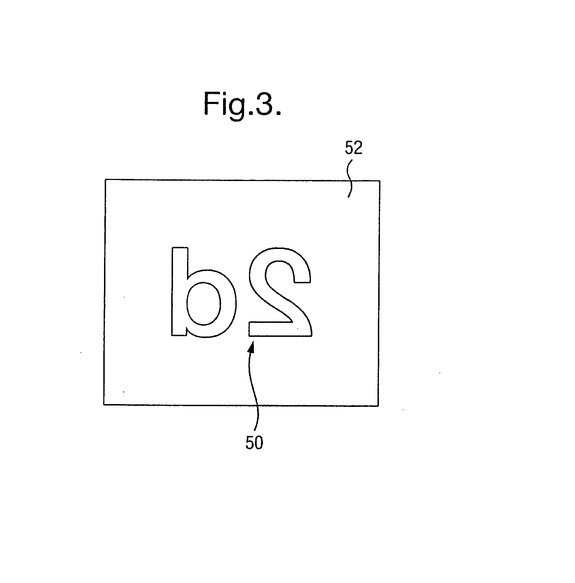

Located above the base 34 of the heat sealing tool 32, are two lines of five individual heating plates (not shown) mounted in a support block 36. Each plate is formed with a raised portion 50 (Figure 3) defining a unique identifier, in this case 2d, of the heating plate 52 concerned.

Once the unsealed trays 30 are in position within the heat sealing tool 32, the heating plates (which are mounted in an upper support block 36) are brought by movement of the support block 36 into engagement with the trays 30 and with the film 41 between the plates and the trays. Heat is applied to the plates causing correspondingly shaped portions of the film to detach from the web 41 and be heat sealed to the individual trays as shown in Figure 2. At the same time. the heated raised portion 50 on each plate causes a corresponding unique identifier to be formed or moulded, similar to heat stamping, into the film itself as can be seen in Figure 2.

In Figure 2, it can be seen that the plates are individually labelled 1 a-1 e and 2a-2e.

After sealing, the support block 36 is raised and the gripper arms activated to transfer the sealed packages out of the tool 32 and onto the conveyors 22,25. The remainder of the web of the film 41 is then collected on the pick-up roller 46.

If a fault is found in a particular sealed package, it is now possible to identify the individual heat sealing plate concerned by reference to the unique identifier 50.

## Claims

1. A food packaging method, the method comprising:
placing a food item in a container; and
heat sealing a film cover on the container using a heated plate so as to seal the food item in the container;
**characterized by** forming a plate identifier in the film during the heat sealing process, the identifier identifying the heated plate used in the heat sealing process.

2. A method according to claim 1, wherein the identifier comprises one or more alphanumeric characters.

3. A method according to claim 1 or claim 2, wherein the plate includes a raised portion, defining the plate identifier, for forming the plate identifier in the film.

4. A method according to any of the preceding claims, further comprising:
performing a number of processes to create a packaged food item including sealing the item in a package;
generating an identifier for the package and recording the identifier on the package; and
storing data items relating to the packaging process in one or more storage locations in a database addressed by the said identifier.

## Patentansprüche

1. Verfahren zum Verpacken von Nahrungsmitteln, wobei das Verfahren umfasst:
Platzieren eines Nahrungsmittels in einen Behälter; und
Heißsiegeln einer Filmabdeckung auf den Behälter unter Verwendung einer erhitzten Platte, um das Nahrungsmittel im Behälter zu versiegeln
**gekennzeichnet durch** Bilden eines Plattenbezeichners im Film während des Heißsiegelvorgangs, wobei der Bezeichner die beim Heißsiegelvorgang verwendete erhitzte Platte identifiziert.

2. Verfahren nach Anspruch 1, wobei der Bezeichner einen oder mehrere alphanumerische Zeichen umfasst.

3. Verfahren nach Anspruch 1 oder Anspruch 2, wobei die Platte einen erhabenen Abschnitt einschließt, der den Plattenbezeichner definiert, um den Plattenbezeichner im Film zu bilden.

4. Verfahren nach einem beliebigen der vorangehenden Ansprüche, das ferner umfasst:
Ausführen einer Reihe von Vorgängen, um ein verpacktes Nahrungsmittel herzustellen was das Versiegeln des Nahrungsmittels in eine Verpackung einschließt;
Generieren eines Bezeichners für die Packung und Aufzeichnen des Bezeichners auf die Packung; und
Speichern von Datenelementen bezüglich des Verpackungsvorgangs in einer oder mehreren Speicherstellen in einer Datenbank, die der Bezeichner adressiert.

## Revendications

1. Procédé d'emballage d'aliment, le procédé comportant :
l'étape consistant à placer un aliment dans un contenant ; et
l'étape consistant à thermosceller un revêtement de film sur le contenant au moyen d'une plaque chauffée de manière à sceller l'aliment dans le contenant ;
**caractérisé par** la formation d'un identifiant de plateau dans le film au cours du processus de thermoscellage, l'identifiant permettant d'identifier la plaque chauffée ayant servi au cours du processus de thermoscellage.

2. Procédé selon la revendication 1, dans lequel l'identifiant comporte un ou plusieurs caractères alphanumériques.

3. Procédé selon la revendication 1 ou la revendication 2, dans lequel la plaque comprend une partie surélevée, définissant l'identifiant de la plaque, pour former l'identifiant de la plaque dans le film.

4. Procédé selon l'une quelconque des revendications précédentes, comportant par ailleurs :
l'étape consistant à effectuer un certain nombre de processus pour créer un aliment emballé comprenant l'étape consistant à sceller l'aliment dans un emballage ;
l'étape consistant à générer un identifiant pour l'emballage et l'étape consistant à enregistrer l'identifiant sur l'emballage ; et
l'étape consistant à stocker des éléments de données se rapportant au processus d'emballage dans un ou plusieurs emplacements de stockage dans une base de données adressée par ledit identifiant.
